# EUROPÄISCHE PATENTSCHRIFT

(11) **EP 3 891 879 B1**
(45) Veröffentlichungstag und Bekanntmachung des Hinweises auf die Patenterteilung: **22.04.2026**
(21) Anmeldenummer: 19801597.6
(22) Anmeldetag: 18.11.2019
(51) Int. Cl.: H02M 3/335, H02M 3/158, H02M 1/00

(54) **SCHALTNETZTEIL MIT GEKOPPELTEN TIEFSETZERSTUFEN**
SWITCHED-MODE POWER SUPPLY HAVING COUPLED STEP-DOWN CONVERTER STAGES
ALIMENTATION À DÉCOUPAGE COMPORTANT DES ÉTAGES ABAISSEURS COUPLÉS

(30) Priorität: 05.12.2018 BE 201805855
(43) Veröffentlichungstag der Anmeldung: 13.10.2021
(73) Patentinhaber: Phoenix Contact GmbH & Co. KG, 32825 Blomberg (DE)
(72) Erfinder: MOSER, Alexander, 59457 Werl (DE); SPRINK, Thomas, 33154 Salzkotten (DE)
(74) Vertreter: Patentship Patentanwaltsgesellschaft mbH
(86) Internationale Anmeldenummer: PCT/EP2019/081624
(87) Internationale Veröffentlichungsnummer: WO 2020/114758

(56) Entgegenhaltungen:
- WO-A1-2013/086445
- WO-A1-2014/168911
- CN-A- 105 356 758
- CN-A- 105 743 344
- JP-A- 2008 187 817
- US-A- 5 932 995
- US-A1- 2016 006 365
- TING QIAN ET AL: "Input-Series Two-Stage DC-DC Converter with Inductor Coupling", POWER ELECTRONICS SPECIALISTS CONFERENCE, 2007. PESC 2007. IEEE, IEEE, PISCATAWAY, NJ, USA, 17 June 2007 (2007-06-17), pages 326 - 330, XP031218310, ISBN: 978-1-4244-0654-8
- PARK JEONGPYO ET AL: "Quasi-Resonant (QR) Controller With Adaptive Switching Frequency Reduction Scheme for Flyback Converter", IEEE TRANSACTIONS ON INDUSTRIAL ELECTRONICS, IEEE SERVICE CENTER, PISCATAWAY, NJ, USA, vol. 63, no. 6, 1 June 2016 (2016-06-01), pages 3571 - 3581, XP011609630, ISSN: 0278-0046, [retrieved on 20160510], DOI: 10.1109/TIE.2016.2523931
- WALKER GEOFFREY R ET AL: "An isolated MOSFET gate driver", 1 January 1996 (1996-01-01), pages 1 - 7, XP093148673, Retrieved from the Internet <URL:https://eprints.qut.edu.au/63591/1/fetdrvr-t.pdf> [retrieved on 20240405]
- THE VAN NGUYEN ET AL: "Design and Investigation of an Isolated Gate Driver Using CMOS Integrated Circuit and HF Transformer for Interleaved DC/DC Converter", IEEE TRANSACTIONS ON INDUSTRY APPLICATIONS, IEEE SERVICE CENTER, PISCATAWAY, NJ, US, vol. 49, no. 1, 1 January 2013 (2013-01-01), pages 189 - 197, XP011487590, ISSN: 0093-9994, DOI: 10.1109/TIA.2012.2229254
- BAOXING CHEN ET AL: "Technical Article Integration of Isolation for Grid-Tied Photovoltaic Inverters", 1 July 2012 (2012-07-01), XP055606344, Retrieved from the Internet <URL:https://www.analog.com/media/en/technical-documentation/tech-articles/integration-of-isolation-for-grid-tied-photovoltaic-inverters-ms-2356.pdf> [retrieved on 20190717]

## Beschreibung

Die Erfindung betrifft ein galvanisch getrenntes Schaltnetzteil mit zwei gekoppelten Tiefsetzerstufen zur Herabsetzung der Isolationsanforderungen zwischen Eingangsspannung und Ausgangsspannung.

Im Bereich der sicheren Trennung haben Stromversorgungen die Aufgabe, die Spannung an den jeweiligen Verbraucher anzupassen. Je nach speisender Quelle ist die Eingangsspannung im berührgefährlichen Bereich oberhalb einer gewissen Spannungsgrenze. So wird ein industrieller Schaltschrank üblicherweise von einer berührgefährlichen Spannung von 120VAC oder 230VAC bzw. Niederspannung bis 1000VAC / 1500VDC gespeist. Hierzu sind Anforderungen an die elektrische Sicherheit wie Isolationsabstände oder -materialien oder einen Berührschutz einzuhalten. Die Verbraucher in dem Schaltschrank, wie z.B. eine Steuerung (SPS) oder Sensoren oder Aktoren, werden von einer berührbaren Sicherheits-Kleinspannung (SELV = safety extra low voltage) gespeist, damit diese keine besonderen Anforderungen an die elektrische Sicherheit in dem Verbraucher oder dessen Anschlüssen umsetzen müssen.

Aufgabe einer Stromversorgung ist es daher auch, die berührgefährliche Eingangsspannung von der berührbaren Ausgangsspannung sicher zu trennen.

Hierzu werden innerhalb einer Stromversorgung entsprechend der jeweiligen Anwendung normative Anforderungen an minimale Luft- und Kriechstrecken (LuK) zur Trennung zwischen der berührgefährlichen Eingangsspannung und der berührbaren Ausgangsspannung gestellt. Grundsätzliche Anforderungen an die Luft- und Kriechstrecken sind z.B. in der Normenreihe IEC 60664: "Isolationskoordination für elektrische Betriebsmittel in Niederspannungsanlagen" definiert. Entsprechend dem Produkt und der Anwendung sind die jeweiligen Produktnormen wie IEC 62109: "Sicherheit von Wechselrichtern zur Anwendung in photovoltaischen Energiesystemen",
IEC 60950: "Einrichtungen der Informationstechnik - Sicherheit" oder IEC 61010: "Sicherheitsbestimmungen für elektrische Mess-, Steuer-, Regel- und Laborgeräte" oder IEC62368: "Einrichtungen für Audio/Video-, Informations- und Kommunikationstechnik - Teil 1: Sicherheitsanforderungen" maßgeblich.

Die Druckschrift "Qian T. et al.: "Input-Series Two-Stage DC-DC Converter with Inductor Coupling", Power Electronics Specialists Conference, 2007. IEEE, PISCATAWAY, NJ, USA, 17. Juni 2007, Seiten 326-330, XP031218310 ISBN 978-1-4244-0654-8" betrifft 2-stufige DC/DC Wandler mit induktiver Kopplung.

Die Druckschrift JP 2008 187817 A betrifft eine DC Spannungsversorgung mit einer Mehrzahl von Flyback DC/DC-Wandlern.

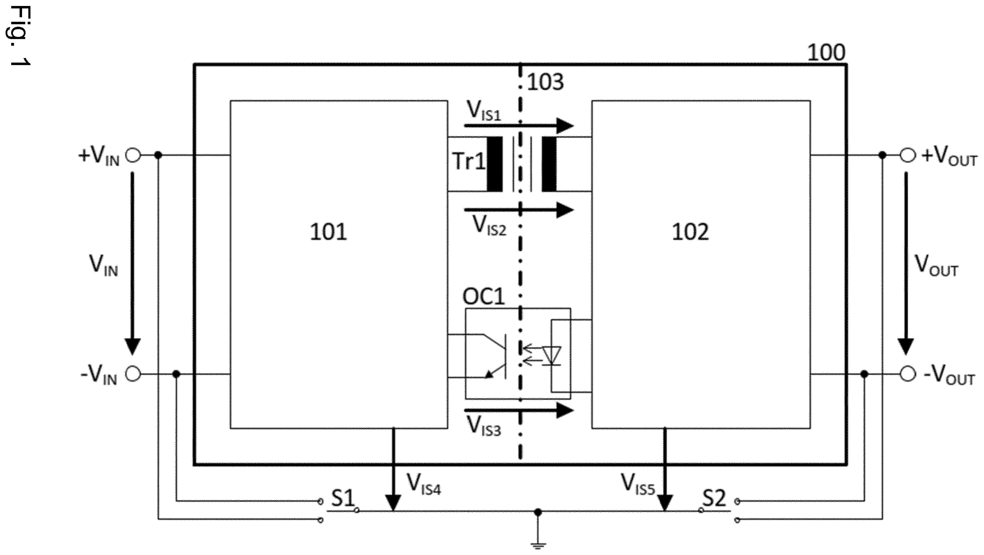

Figur 1 zeigt ein Prinzipschaltbild der Isolation in einer galvanisch getrennten Stromversorgung 100 und verdeutlicht die auftretenden Isolationsspannungen V_{IS1}, V_{IS2} und V_{IS3} über der galvanischen Trennstrecke 103. Dazu werden die Schalter S1 und S2 geschlossen und die Eingangsspannung V_{IN} und die Ausgangsspannung V_{OUT} an jeweils einem Punkt geerdet. Über den Trennstrecken IS1 ... IS5 wird die höchste auftretende Spannung üblicherweise bei maximaler Eingangsspannung V_{IN} gemessen.

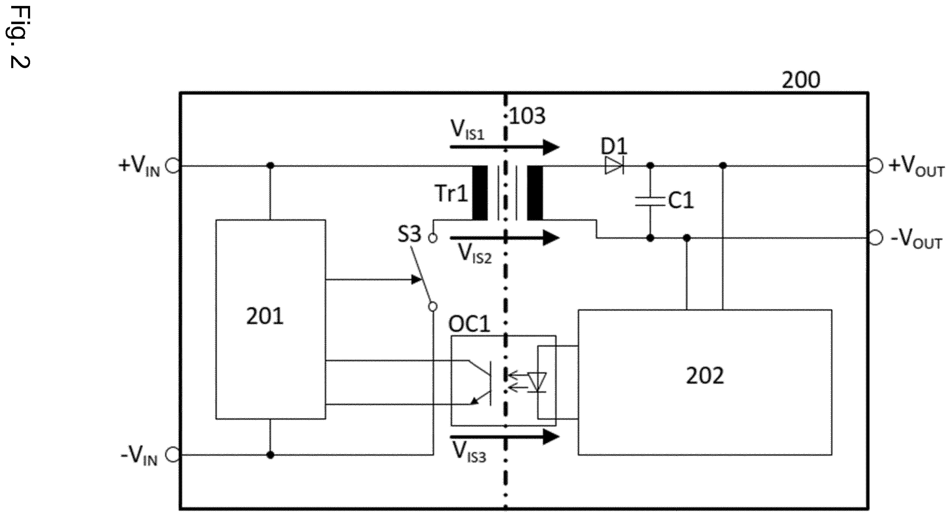

Figur 2 zeigt ein Prinzipschaltbild der Isolation in einem galvanisch getrennten Schaltnetzteil 200. Im Wesentlichen ergeben sich Isolationsanforderungen über dem Trafo Tr1 sowie über der Rückkopplung, d.h. Fehlerregelung der Ausgangsgrößen über den Optokoppler OC1. Die Ausgangsgrößen können u.a. die Ausgangsspannung oder der Ausgangsstrom sein, ggf. auch für mehrere Ausgangsspannungen.

Hier nicht dargestellt ist ggf. eine eingangsseitige Gleichrichtung und Glättung für ein Schaltnetzteil mit Wechselspannungsspeisung sondern nur der eigentlich galvanisch trennende DC/DC-Wandler. Ebenso ist das Prinzipschaltbild unabhängig von der Funktionsweise des DC/DC-Wandlers. Dieser kann nach bekannten Schaltungsgrundprinzipien realisiert werden, z.B. als Sperrwandler oder Flusswandler oder Halbbrücken- oder Vollbrücken- oder Resonanzwandler realisiert werden. Insbesondere bei hohen Eingangsspannungen werden auch Schaltungsgrundkonzepte wie 2-Transistor-Wandler oder eine Reihenschaltung aus obigen Konzepten verwendet. Das verwendete Ansteuerprinzip des Leistungsschalters S3 kann z.B. hartschaltend mit Pulsweitenmodulation (PWM) oder resonant mit Frequenzmodulation (PFM) erfolgen.

Ebenso kann der Leistungsschalter S3 unabhängig von der verwendeten Technologie als beliebig ein- und ausschaltbarer Leistungsschalter realisiert sein und kann z.B. als MOSFET oder Bipolartransistor oder IGBT oder GAN-FET oder SiC-FET realisiert werden.

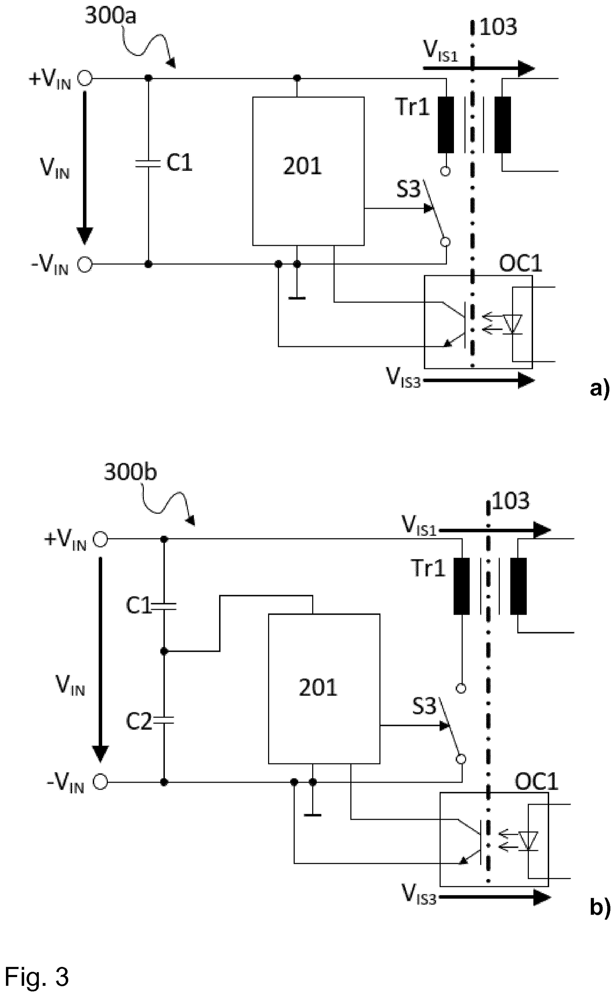

Die Figuren 3a und 3b zeigen Prinzipschaltbilder des Bezugspotentials der primärseitigen Ansteuerung und des Optokopplers OC1 in einem galvanisch getrennten Schaltnetzteil 300a, 300b. Die primärseitige Ansteuerung des Leistungsschalters S3 und des Rückkopplungsoptokopplers OC1 besitzen als Bezugspotential üblicherweise die negative Eingangsspannung -V_{IN}. Hierdurch kann der Leistungsschalter S3 direkt angesteuert werden.

Auch kann der Optokoppler OC1 sowohl als eigentlicher Optokoppler als auch magnetischer Koppler realisiert werden.

Die Isolationsspannungen ergeben sich bei maximaler Eingangsspannung. Ist z.B. die speisende Spannung eine Gleichspannung, wird diese entweder an +V_{IN} oder - V_{IN} geerdet. Bei kleiner Ausgangsspannung spielt es nur untergeordnet eine Rolle, ob +V_{OUT} oder -V_{OUT} als geerdet betrachtet wird. Über die Trennstrecke am Trafo Tr1 mit V_{IS1} und V_{IS2} ergeben sich die höchsten Isolationsspannungen, wenn -V_{IN} geerdet wird. Da der Optokoppler OC1 meistens Bezug zu -V_{IN} hat, ergibt sich die höchste Isolationsspannung V_{IS3}, wenn +V_{IN} geerdet betrachtet wird. Die Isolationsspannung V_{IS2} ist effektiv kleiner als die Eingangsspannung V_{IN}, kann jedoch je nach Schaltnetzteilprinzip als Spitzenwert deutlich über V_{IN} liegen.

Soll das Schaltnetzteil universell verwendet werden, kann es entweder an positiver oder negativer Eingangsspannung geerdet werden. Durch die verschiedenen Erdungsmöglichkeiten ergeben sich sehr hohe Anforderungen an die Isolationen über der Trennstrecke.

Daraus resultiert die Aufgabe der vorliegenden Erfindung, ein Schaltnetzteil mit herabgesetzten Isolationsanforderungen bereitzustellen.

Durch eine Erweiterung des Schaltungsgrundkonzeptes sollen die Isolationsanforderungen über der Trennstrecke deutlich herabgesetzt werden. Die Isolationsspannungen über den Bauteilen der Trennstrecke sollen unabhängig von der Erdung der Ein- und Ausgangsspannungen verringert werden.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

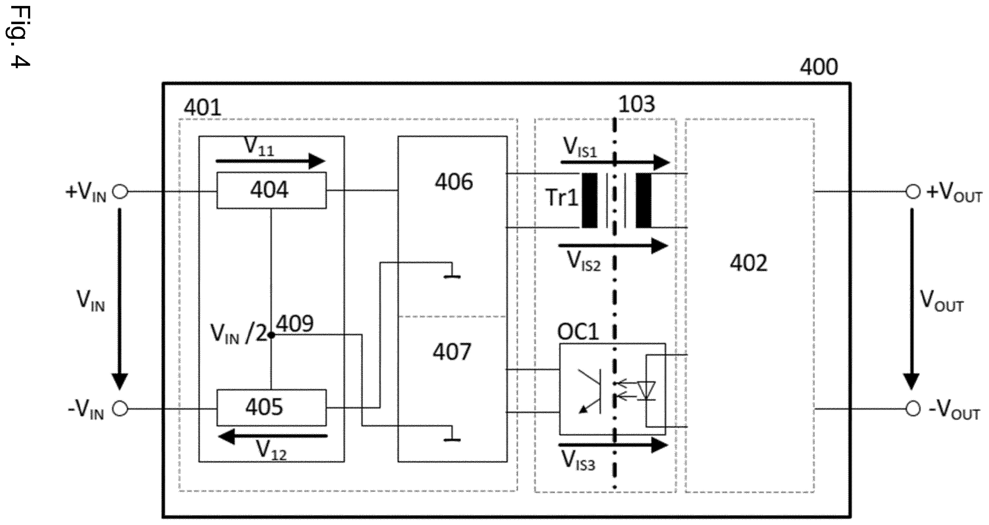

Ein Grundkonzept der Erfindung besteht darin, dem galvanisch trennenden DC/DC-Wandler sowohl in positiver als auch negativer Eingangsspannung jeweils einen Tiefsetzer vorzuschalten. Über den beiden Tiefsetzerstufen ergibt sich ein Spannungsabfall V₁₁ und V₁₂ (siehe Figur 4), wodurch sich die Isolationsspannung über der Trennstrecke V_{IS1} unabhängig von der Erdung herabsetzt. Vorteilhaft ist es, die Spulen der beiden Tiefsetzerschaltungen zu kombinieren bzw. zu koppeln und auf einen Ferritkern zu wickeln, wodurch sich beide Tiefsetzerstufen automatisch symmetrieren und Toleranzen zwischen den Spulen keine Rolle spielen. Hierzu ist eine gleichzeitige Ansteuerung der Leistungsschalter der beiden Tiefsetzer notwendig.

Gemäß einem ersten Aspekt wird die Aufgabe gelöst durch ein Schaltnetzteil gemäß Anspruch 1.

Mit einem solchen Schaltnetzteil wird der technische Vorteil erreicht, dass sich über den beiden Tiefsetzerstufen ein Spannungsabfall ergibt, wodurch sich die Isolationsspannung über der Trennstrecke unabhängig von der Erdung herabsetzt.

In einer vorteilhaften Ausführungsform des Schaltnetzteils sind die beiden Tiefsetzerstufen ausgebildet, einen Spannungsabfall der Eingangsspannung zu bewirken und damit eine Isolationsspannung über dem galvanischen Trennelement herabzusetzen.

Damit wird der technische Vorteil erreicht, dass sich die vorgegebenen Sicherheitsanforderungen bezüglich Isolation zwischen der Eingangsspannung und der Ausgangsspannung leichter einhalten lassen, d.h. die Anforderungen an das galvanische Trennelement können reduziert werden.

Erfindungsgemäß umfassen die beiden Tiefsetzerstufen jeweils eine Spule, welche auf einen gemeinsamen Kern gewickelt sind.

Damit wird der technische Vorteil erreicht, dass sich die beiden Tiefsetzerstufen automatisch symmetrieren und Toleranzen zwischen den Spulen keine Rolle spielen.

Erfindungsgemäß umfassen die beiden Tiefsetzerstufen jeweils einen Leistungsschalter, eine Freilaufdiode und die über den gemeinsamen Kern gekoppelten Spulen. Die Freilaufdioden können auch als Leistungsschalter realisiert sein.

Durch die gleichartige Struktur der beiden Tiefsetzerstufen wird der technische Vorteil erzielt, dass der Spannungsabfall über beide Tiefsetzerstufen gleich ist und die Isolationsanforderungen über dem galvanischen Trennelement immer um den entsprechenden Spannungsabfall herabgesetzt werden.

Erfindungsgemäß sind die beiden Tiefsetzerstufen über ein Ansteuersignal gemeinsam ansteuerbar.

Durch die gemeinsame Ansteuerung der beiden Tiefsetzerstufen wird der technische Vorteil erzielt, dass der Spannungsabfall über beide Tiefsetzerstufen gleich ist und die Isolationsanforderungen über dem galvanischen Trennelement immer um den entsprechenden Spannungsabfall herabgesetzt werden.

In einer vorteilhaften Ausführungsform des Schaltnetzteils umfasst der Eingangsschaltkreis einen Impulsübertrager oder eine Treiberschaltung, welche ausgebildet sind, das Ansteuersignal der beiden Tiefsetzerstufen an ein Bezugspotential der beiden Leistungsschalter anzupassen.

Erfindungsgemäß umfasst der Eingangsschaltkreis eine Ansteuerschaltung, welche ausgebildet ist, das Ansteuersignal zu erzeugen, wobei ein Bezugspotential der Ansteuerschaltung mit einem Mittelabgriff zwischen den beiden Tiefsetzerstufen verbunden ist.

Damit wird der technische Vorteil erreicht, dass sich die Eingangsspannung an der Ansteuerschaltung halbiert, wodurch die Isolationsspannung unabhängig von der Erdung in etwa auf die Hälfte herabgesetzt wird.

In einer vorteilhaften Ausführungsform des Schaltnetzteils sind die beiden Tiefsetzerstufen eingangsseitig über zwei in Reihe geschaltete Eingangskondensatoren miteinander gekoppelt, deren Mittelabgriff den Mittelabgriff zwischen den beiden Tiefsetzerstufen bildet.

Durch die Tiefsetzer wird die Eingangsspannung halbiert, die Kondensatoren glätten den AC-Anteil.

In einer vorteilhaften Ausführungsform des Schaltnetzteils sind die beiden Eingangskondensatoren zwischen der positiven Eingangsspannung und der negativen Eingangsspannung in Reihe geschaltet.

Damit wird der technische Vorteil erreicht, dass die beiden Eingangskondensatoren einen Spannungsteiler realisieren, dessen Mittenabgriff leicht zugänglich ist.

In einer vorteilhaften Ausführungsform des Schaltnetzteils sind die beiden Tiefsetzerstufen ausgangsseitig über einen einzelnen Ausgangskondensator miteinander gekoppelt.

Damit wird der technische Vorteil einer leichteren Realisierung der Tiefsetzerstufen erreicht, da ausgangsseitig kein Mittenabgriff benötigt wird.

In einer vorteilhaften Ausführungsform des Schaltnetzteils umfasst das galvanische Trennelement einen Transformator, der über einen Leistungsschalter durch die Ansteuerschaltung ansteuerbar ist.

Durch die Ansteuerung des Transformators über die Ansteuerschaltung, deren Bezugspotential mit einem Mittelabgriff zwischen den beiden Tiefsetzerstufen verbunden ist, wird der technische Vorteil erreicht, dass sich die Isolationsspannung über dem Transformator bei Erdung an der positiven Eingangsspannung auf die Hälfte der positiven Eingangsspannung reduziert.

In einer vorteilhaften Ausführungsform des Schaltnetzteils umfasst der Eingangsschaltkreis einen zwischen die Ansteuerschaltung und den Leistungsschalter geschalteten Transformator, welcher die Ansteuerschaltung von dem Leistungsschalter galvanisch trennt.

Durch einen Übertrager wird das Ansteuersignal an das Bezugspotential des Leistungsschalters angepasst.

Erfindungsgemäß umfasst das galvanische Trennelement ein Rückkopplungselement zur Regelung des Eingangsschaltkreises, insbesondere einen Optokoppler oder einen magnetischen Koppler. Der Optokoppler wird von der sekundärseitigen Regelung 202 angesteuert (siehe Fig. 2).

Der Ausgang des Rückkopplungselements in die primärseitige Ansteuerschaltung und dessen Bezugspotential ist mit dem Mittelabgriff zwischen den beiden Tiefsetzerstufen verbunden, wodurch der technische Vorteil erreicht, dass sich die Isolationsspannung über dem Rückkopplungselement in etwa auf die Hälfte reduziert.

In einer vorteilhaften Ausführungsform ist das Schaltnetzteil an der der positiven Eingangsspannung oder an der negativen Eingangsspannung geerdet.

Gemäß einem zweiten Aspekt betrifft die Erfindung ein Verfahren gemäß Anspruch 11 zum Herabsetzen der Isolationsanforderung an ein Schaltnetzteil.

Mit einem solchen Verfahren wird der technische Vorteil erreicht, dass sich über den beiden Tiefsetzerstufen ein Spannungsabfall ergibt, wodurch sich die Isolationsspannung über der Trennstrecke, d.h. dem galvanischen Trennelement, unabhängig von der Erdung herabsetzt.

Weitere Ausführungsbeispiele werden Bezug nehmend auf die beiliegenden Zeichnungen erläutert. Es zeigen:
- Fig. 1: ein Prinzipschaltbild der Isolation in einer galvanisch getrennten Stromversorgung 100;
- Fig. 2: ein Prinzipschaltbild der Isolation in einem galvanisch getrennten Schaltnetzteil 200;
- Fig. 3a/b/c: Prinzipschaltbilder des Bezugspotentials der primärseitigen Ansteuerung und des Optokopplers OC1 in einem galvanisch getrennten Schaltnetzteil 300a, 300b sowie eines Tiefsetzers 300c;
- Fig. 4: ein Prinzipschaltbild eines Schaltnetzteils 400 mit herabgesetzten Isolationsanforderungen;
- Fig. 5: ein Prinzipschaltbild eines Schaltnetzteils 500 mit geringerer Spannungsbelastung am Optokoppler durch Veränderung des Bezugspotentials der primärseitigen Ansteuerung;
- Fig. 6: ein Prinzipschaltbild eines Schaltnetzteils 600 mit gekoppelten Tiefsetzerstufen gemäß einer Ausführungsform; und
- Fig. 7: eine schematische Darstellung eines Verfahrens 700 zum Herabsetzen der Isolationsanforderungen an ein Schaltnetzteil gemäß einer Ausführungsform.

Die im Folgenden vorgestellten Schaltnetzteile umfassen Tiefsetzer mit gekoppelten Tiefsetzerstufen.

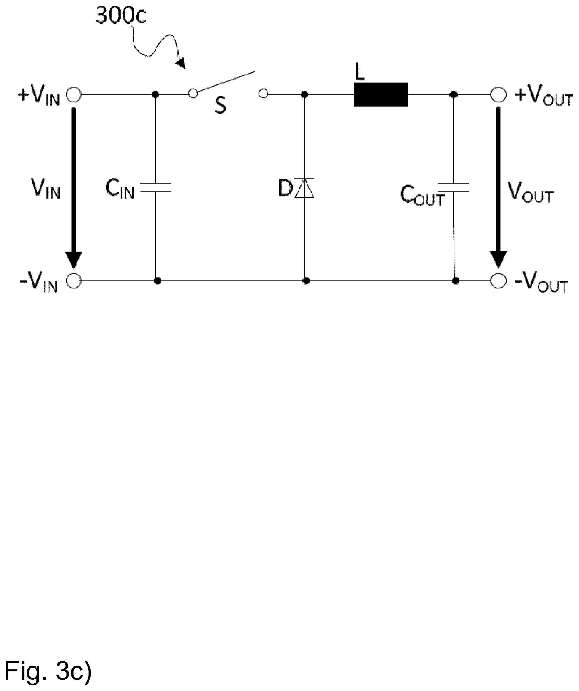

Ein Tiefsetzer entsprechend Fig 3c bzw. Tiefsetzsteller, Abwärtswandler, Abwärtsregler (englisch step-down converter oder buck converter) bezeichnet einen schaltenden Gleichspannungswandler, bei dem die Ausgangsspannung V_{OUT} stets kleiner ist als der Betrag der Eingangsspannung V_{IN}.

Der Tiefsetzer umfasst einen Schalter S, der in Reihe mit einer Diode D zwischen die positive +V_{IN} und negative Eingangsspannung -V_{IN} geschaltet ist. Der Schalter S ist ferner in Reihe mit einer Spule L zwischen die positive Eingangsspannung +V_{IN} und die positive Ausgangsspannung +V_{OUT} geschaltet. Ferner ist ein Kondensator C zwischen die positive +V_{OUT} und die negative Ausgangsspannung -V_{OUT} geschaltet.

Der Schalter S (meist ein Transistor) wird von einer Steuerung regelmäßig ein- und ausgeschaltet; üblicherweise werden einige hundert bis mehrere Millionen Schaltzyklen je Sekunde durchgeführt. Dadurch wird elektrische Energie von der eingangsseitig angeschlossenen Spannungsquelle V_{IN} zur ausgangsseitig angeschlossenen Last transferiert. Der Tiefsetzer umfasst zwei Energiespeicher, nämlich die Spule L und den Kondensator C, welche die Versorgung der Last in den Phasen ermöglichen, in denen der Schalter geöffnet ist. Die Induktivität der Spule L hält die höhere Eingangsspannung von der Last fern. Die Ausgangsgröße kann durch Steuerung der Ein- und Ausschaltzeiten des Schalters S eingestellt werden. Diese Steuerung erfolgt üblicherweise durch einen Regler, um Ausgangsspannung oder - strom auf einem gewünschten Wert zu halten.

Während der Einschaltzeit fließt der Laststrom durch die Spule und durch den Verbraucher; die Diode D sperrt. Während der Ausschaltphase wird die in der Spule gespeicherte Energie abgebaut: Der Strom durch den Verbraucher fließt weiter, nun jedoch durch die Diode D und aus dem Kondensator C.

Die Spule L und der Kondensator C bilden einen Tiefpass zweiter Ordnung. Effektiv wird die Abwärtswandlung dadurch erreicht, dass aus der Rechteckspannung der Gleichanteil herausgefiltert wird. Wie hoch dieser übrigbleibende Gleichanteil ist, kann durch das Tastverhältnis eingestellt werden.

Fig. 4 zeigt ein Prinzipschaltbild eines Schaltnetzteils 400 mit herabgesetzten Isolationsanforderungen.

Das Schaltnetzteil 400 umfasst einen von einer Eingangsspannung V_{IN} gespeisten Eingangsschaltkreis 401; einen mit dem Eingangsschaltkreis 401 gekoppelten Ausgangsschaltkreis 402 zum Bereitstellen einer Ausgangsspannung V_{OUT}; und ein galvanisches Trennelement 103 zwischen dem Eingangsschaltkreis 401 und dem Ausgangsschaltkreis 402, welches ausgebildet ist, eine vorgegebene Sicherheitsanforderung bezüglich einer Isolation zwischen der Eingangsspannung V_{IN} und der Ausgangsspannung V_{OUT} einzuhalten. Der Eingangsschaltkreis 401 umfasst zwei gekoppelte Tiefsetzerstufen 403, von denen eine erste Tiefsetzerstufe 404 in der positiven Eingangsspannung +V_{IN} und eine zweite Tiefsetzerstufe 405 in der negativen Eingangsspannung -V_{IN} dem galvanischen Trennelement 103 vorgeschaltet sind.

Die beiden Tiefsetzerstufen 403 bewirken einen Spannungsabfall der Eingangsspannung V_{IN} und setzen damit eine Isolationsspannung V_{IS1}, V_{IS2}, V_{IS3} über dem galvanischen Trennelement 103 herab.

Das galvanische Trennelement 103 umfasst einen Transformator Tr1, der einen Leistungspfad 406 des Eingangsschaltkreises 401 von dem Ausgangsschaltkreis 402 des Schaltnetzteils 400 entkoppelt. Über dem Transformator Tr1 fallen die Isolationsspannungen V_{IS1} und V_{IS2} zwischen Eingangsschaltkreis 401 und Ausgangsschaltkreis 402 ab. Das galvanische Trennelement 103 umfasst ferner einen Optokoppler OC1, der eine Regelung 407 des Eingangsschaltkreises 401 von dem Ausgangsschaltkreis 402 des Schaltnetzteils 400 entkoppelt. Über dem Optokoppler OC1 fällt die Isolationsspannung V_{IS3} zwischen Eingangsschaltkreis 401 und Ausgangsschaltkreis 402 ab.

Über den beiden Tiefsetzerstufen 404, 405 ergibt sich ein jeweiliger Spannungsabfall von V₁₁ und V₁₂, wodurch sich die Isolationsspannung über der Trennstrecke V_{IS1} unabhängig von der Erdung herabsetzt. Vorteilhaft ist es, die Spulen der beiden Tiefsetzerschaltungen 404, 405 zu kombinieren bzw. zu koppeln und auf einen Ferritkern zu wickeln, wodurch sich beide Tiefsetzerstufen 404, 405 automatisch symmetrieren und Toleranzen zwischen den Spulen keine Rolle spielen. Hierzu ist eine gleichzeitige Ansteuerung der Leistungsschalter der beiden Tiefsetzer 404, 405 notwendig.

Ein Bezugspotential der Regelung 407 des Eingangsschaltkreises 401 ist mit einem Mittelabgriff 409 zwischen den beiden Tiefsetzerstufen 404, 405 verbunden. Damit ergibt sich eine Halbierung der Isolationsspannung V_{IS3} über dem Optokoppler OC1 auf etwa die halbe Eingangsspannung V_{IN}/2.

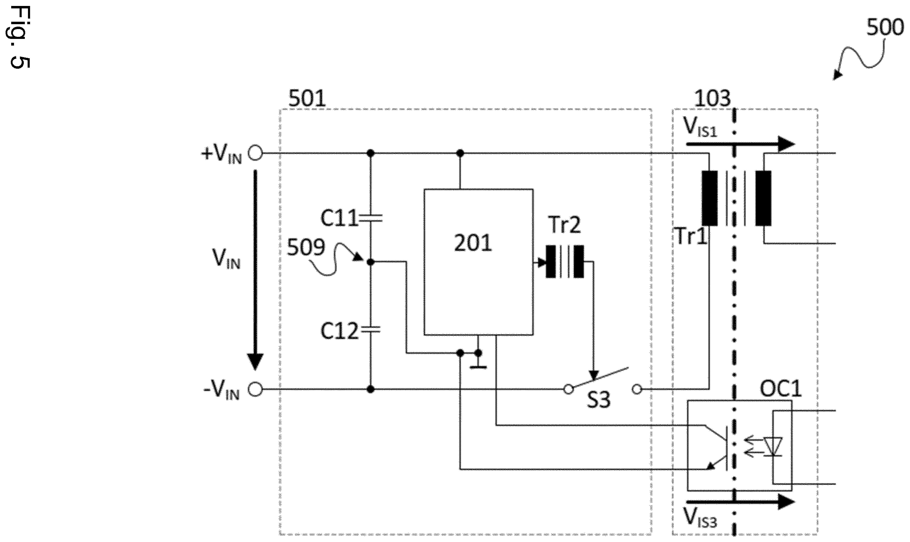

Fig. 5 zeigt ein Prinzipschaltbild eines Schaltnetzteils 500 mit geringerer Spannungsbelastung am Optokoppler durch Veränderung des Bezugspotentials der primärseitigen Ansteuerung. In dem Schaltnetzteil 500 sind die beiden Tiefsetzerstufen nicht dargestellt, es dient lediglich der vereinfachten Darstellung des Prinzips der Veränderung des Bezugspotentials der primärseitigen Ansteuerung.

Die Regelung des Eingangsschaltkreises 501 wird anstatt mit dem negativen Eingangsspannungspotential -V_{IN} mit dem Mittelpunkt 509 zwischen beiden Tiefsetzerstufen verbunden, welche dem Mittelabgriff der zwei Eingangskondensatoren C11 und C12 entspricht, wodurch die Eingangsspannung V_{IN} halbiert wird auf V_{IN} / 2 und die Isolationsspannung Viss unabhängig von der Erdung auf etwa die Hälfte herabgesetzt wird.

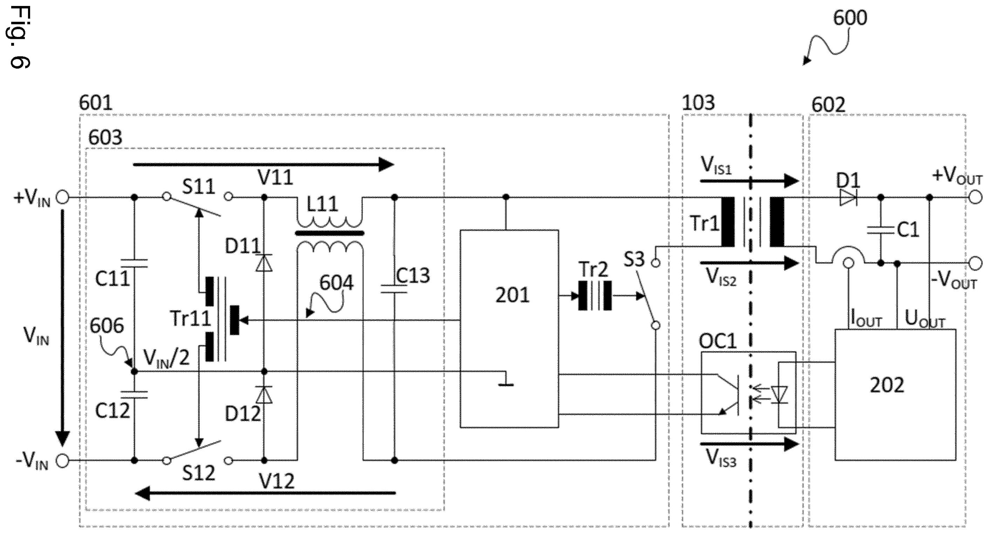

Fig. 6 zeigt ein Prinzipschaltbild eines Schaltnetzteils 600 mit gekoppelten Tiefsetzerstufen gemäß einer Ausführungsform.

Das Schaltnetzteil 600 umfasst einen von einer Eingangsspannung V_{IN} gespeisten Eingangsschaltkreis 601; einen mit dem Eingangsschaltkreis 601 gekoppelten Ausgangsschaltkreis 602 zum Bereitstellen einer Ausgangsspannung V_{OUT}; und ein galvanisches Trennelement 103 zwischen dem Eingangsschaltkreis 601 und dem Ausgangsschaltkreis 602, welches ausgebildet ist, eine vorgegebene Sicherheitsanforderung bezüglich einer Isolation zwischen der Eingangsspannung V_{IN} und der Ausgangsspannung V_{OUT} einzuhalten. Das galvanische Trennelement 103 entspricht dem zu Figur 4 beschriebenen galvanischen Trennelement 103. Der Eingangsschaltkreis 601 umfasst zwei gekoppelte Tiefsetzerstufen 603, von denen eine erste Tiefsetzerstufe in der positiven Eingangsspannung +V_{IN} und eine zweite Tiefsetzerstufe in der negativen Eingangsspannung -V_{IN} dem galvanischen Trennelement 103 vorgeschaltet sind.

Die beiden Tiefsetzerstufen bewirken einen Spannungsabfall der Eingangsspannung V_{IN} und setzen damit eine Isolationsspannung V_{IS1}, V_{IS2}, V_{IS3} über dem galvanischen Trennelement 103 herab.

Die beiden Tiefsetzerstufen 603 umfassen jeweils eine Spule L11, welche auf einen gemeinsamen Kern gewickelt sind. Die beiden Tiefsetzerstufen 603 umfassen jeweils einen Leistungsschalter S11, S12, eine Freilaufdiode D11, D12 und die über den gemeinsamen Kern gekoppelten Spulen L11. Die beiden Tiefsetzerstufen 603 sind über ein Ansteuersignal 604 gemeinsam ansteuerbar. Der Eingangsschaltkreis 601 umfasst einen Impulsübertrager Tr11 oder alternative eine Treiberschaltung (nicht dargestellt), welche ausgebildet sind, das Ansteuersignal 604 der beiden Tiefsetzerstufen 603 an ein Bezugspotential der beiden Leistungsschalter S11, S12 anzupassen.

Der Eingangsschaltkreis 601 umfasst eine Ansteuerschaltung 201, welche ausgebildet ist, das Ansteuersignal 604 zu erzeugen. Ein Bezugspotential 605 der Ansteuerschaltung 201 ist mit einem Mittelabgriff 606 zwischen den beiden Tiefsetzerstufen 603 verbunden. Die beiden Tiefsetzerstufen 603 sind eingangsseitig über zwei in Reihe geschaltete Eingangskondensatoren C11, C12 miteinander gekoppelt, deren Mittelabgriff 606 den Mittelabgriff 606 zwischen den beiden Tiefsetzerstufen 603 bildet. Die beiden Eingangskondensatoren C11, C12 sind zwischen der positiven Eingangsspannung +V_{IN} und der negativen Eingangsspannung -V_{IN} in Reihe geschaltet. Die beiden Tiefsetzerstufen 603 sind ferner ausgangsseitig über einen einzelnen Ausgangskondensator C13 miteinander gekoppelt.

Der Transformator Tr1 des galvanischen Trennelements 103 ist über einen Leistungsschalter S3 durch die Ansteuerschaltung 201 ansteuerbar.

Der Eingangsschaltkreis 601 umfasst einen zwischen die Ansteuerschaltung 201 und den Leistungsschalter S3 geschalteten Transformator Tr2 oder eine nicht gezeigte Treiberstufe, welcher die Ansteuerschaltung 201 an das Bezugspotential des Leistungsschalter S3 anpasst.

Das galvanische Trennelement 103 umfasst ferner ein Rückkopplungselement OC1 zur Regelung des Eingangsschaltkreises 601, welches als Optokoppler OC1 (wie in Fig. 6 dargestellt) oder als magnetischer Koppler (nicht in Fig. 6 gezeigt) realisiert sein kann. Das Rückkopplungselement ist durch die sekundärseitige Regelung 202 ansteuerbar.

Das Schaltnetzteil 600 kann an der der positiven Eingangsspannung +V_{IN} oder an der negativen Eingangsspannung -V_{IN} geerdet sein.

Figur 6 zeigt damit eine Ausführungsform eines Schaltnetzteils 600, dem zwei gekoppelte Tiefsetzerstufen 603 vorgeschaltet sind. Die Tiefsetzerstufen 603 bestehen jeweils aus dem in beliebiger Technologie gefertigten beliebig ein- und ausschaltbaren Leistungsschalter S11 bzw. S12, der Freilaufdiode D11 bzw. D12, die auch ein beliebig ein- und ausschaltbarer Leistungsschalter sein kann, und der gekoppelten Spule L11. Hierbei werden die ausgangsseitigen Spulen der Tiefsetzer 603 auf einen Kern gewickelt. Ebenso erfolgt die Ansteuerung 201 der Tiefsetzerstufen 603 mit einem Signal. Das Ansteuersignal 604 kann über einen Impulsübertrager Tr11 an das Bezugspotential der beiden Leistungsschalter S11 bzw. S12 angepasst werden. Ebenfalls ist eine Anpassung über eine Treiberschaltung (nicht in Fig. 6 gezeigt) möglich.

Durch die gemeinsame Spule und Ansteuerung wird erreicht, dass der Spannungsabfall V11 und V12 über beiden Tiefsetzerstufen 603 gleich ist und die Isolationsanforderungen V_{IS1} und V_{IS2} über dem Trafo Tr1 je nach eingangsseitiger Erdung immer um den Spannungsabfall V11 oder V12 herabgesetzt werden. Dadurch verringert sich auch für das nachfolgende Schaltnetzteil die Spannungsbelastung insbesondere der Leistungshalbleiter.

Bei eingangsseitiger Erdung an +V_{IN} ergibt sich bei üblichem Bezug der primärseitigen Ansteuerung 201 bzw. Regelung an -V_{IN} die Isolationsspannung V_{IS3} über der Rückkopplung bzw. Optokoppler OC1 in Höhe der maximalen Eingangsspannung V_{IN}. Durch Änderung des Bezugs der primärseitigen Ansteuerung 201 auf den Mittelabgriff 606, V_{IN} / 2 zwischen beiden Tiefsetzern 603 halbiert sich bei Erdung an +V_{IN} die Isolationsspannung V_{IS3} auf V_{IN} / 2.

Der Optokoppler OC1 kann sowohl als eigentlicher Optokoppler als auch magnetischer Koppler realisiert werden.

Bei dem Schaltnetzteil 600 der Figur 6 wird nur ein Ansteuersignal 604 für beide Tiefsetzerschaltungen 603 benötigt, das z.B. über einen Impulsübertrager Tr11 mit zwei Ausgangswicklungen an die Leistungsschalter S11 und S12 abgegeben werden kann.

Ein Vorteil des Schaltnetzteils 600 ist die Herabsetzung der nachfolgenden Isolationsspannungen über dem galvanischen Trennelement 103.

Der Mittelpunkt 606, VIN / 2 der beiden Tiefsetzerschaltungen bzw. Tiefsetzerstufen 603 kann zur Herabsetzung der Isolationsspannung insbesondere für die Regelung und den Rückkopplungsoptokoppler OC1 verwendet werden.

Ein weiterer Vorteil besteht darin, dass anstatt zwei Kondensatoren nur ein ausgangsseitiger Kondensator C13 verwendet wird.

Ebenso ergibt sich bei real etwas unterschiedlichen Schaltzeiten der Halbleiterschalter eine größere Toleranz. Wird z.B. der Schalter S11 zuerst eingeschaltet, fließt der Strom durch beide Spulen von L11, C13 oder Tr1, D12 und C12 zum Netzanschluss. Aufgrund der doppelten Windungszahl N ergibt sich eine quadratisch größere Induktivität, da L = N² * A_{L}. Bei gleichen Kondensatoren vervierfacht sich damit die Zeitkonstante t = L * C.

Die vorgestellte Erfindung eignet sich insbesondere zum Einsatz bei einem Schaltnetzteil mit hoher Eingangsspannung von z.B. 1500VDC bei unbekannter Erdung und damit sehr hohen Isolationsanforderungen.

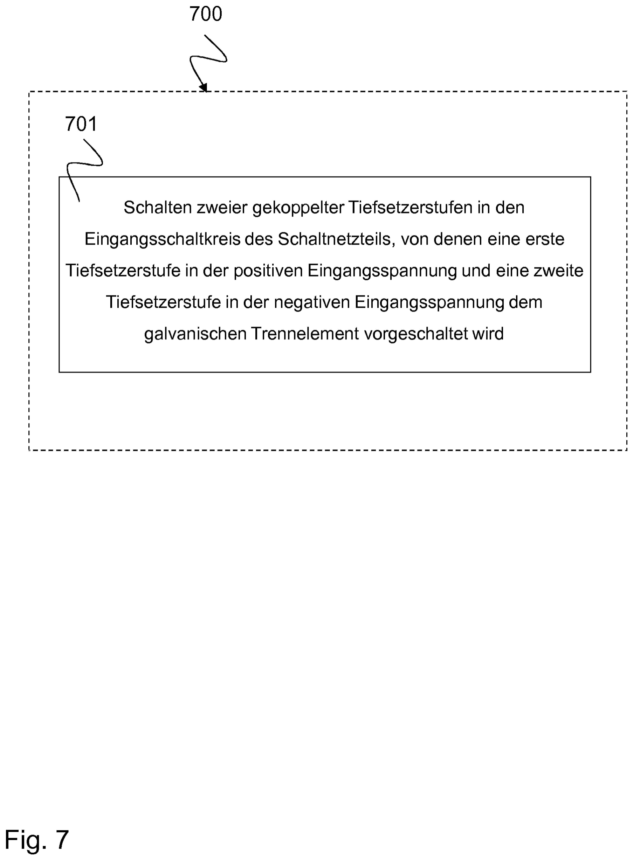

Fig. 7 zeigt eine schematische Darstellung eines Verfahrens 700 zum Herabsetzen der Isolationsanforderungen an ein Schaltnetzteil gemäß einer Ausführungsform.

Das Schaltnetzteil kann ein Schaltnetzteil 400, 500, 600 sein, wie oben zu den Figuren 4 bis 6 beschrieben. Insbesondere umfasst das Schaltnetzteil einen von einer Eingangsspannung V_{IN} gespeisten Eingangsschaltkreis 401; einen mit dem Eingangsschaltkreis 401 gekoppelten Ausgangsschaltkreis 402 zum Bereitstellen einer Ausgangsspannung V_{OUT}; und ein galvanisches Trennelement 103 zwischen dem Eingangsschaltkreis 401 und dem Ausgangsschaltkreis 402, welches ausgebildet ist, eine vorgegebene Sicherheitsanforderung bezüglich einer Isolation zwischen der Eingangsspannung V_{IN} und der Ausgangsspannung V_{OUT} einzuhalten.

Das Verfahren 700 umfasst die folgenden Schritte: Schalten 701 zweier gekoppelter Tiefsetzerstufen 403 in den Eingangsschaltkreis 401 des Schaltnetzteils 400, 500, 600, von denen eine erste Tiefsetzerstufe 404 in der positiven Eingangsspannung +V_{IN} und eine zweite Tiefsetzerstufe 405 in der negativen Eingangsspannung -V_{IN} dem galvanischen Trennelement 103 vorgeschaltet wird.

## Patentansprüche

1. Schaltnetzteil (400, 500, 600), mit:
einem von einer Eingangsspannung (V_{IN}) gespeisten Eingangsschaltkreis (401);
einem mit dem Eingangsschaltkreis gekoppelten Ausgangsschaltkreis (402) zum Bereitstellen einer Ausgangsspannung (V_{OUT}); und
einem galvanischen Trennelement (103) zwischen dem Eingangsschaltkreis (401) und dem Ausgangsschaltkreis (402), welches ausgebildet ist, eine vorgegebene Sicherheitsanforderung bezüglich einer Isolation zwischen der Eingangsspannung (V_{IN}) und der Ausgangsspannung (V_{OUT}) einzuhalten,
wobei der Eingangsschaltkreis (401) zwei gekoppelte Tiefsetzerstufen (403) umfasst, von denen eine erste Tiefsetzerstufe (404) in der positiven Eingangsspannung (+V_{IN}) und eine zweite Tiefsetzerstufe (405) in der negativen Eingangsspannung (-V_{IN}), die dem galvanischen Trennelement (103) vorgeschaltet sind,
wobei die beiden Tiefsetzerstufen (603) jeweils eine Spule (L11) umfassen, welche auf einen gemeinsamen Kern gewickelt sind,
wobei die beiden Tiefsetzerstufen (603) jeweils einen Leistungsschalter (S11, S12), eine Freilaufdiode (D11, D12) und die über den gemeinsamen Kern gekoppelten Spulen (L11) umfassen,
wobei die beiden Tiefsetzerstufen (603) über ein Ansteuersignal (604) gemeinsam ansteuerbar sind,
wobei der Eingangsschaltkreis (601) eine Ansteuerschaltung (201) umfasst, welche ausgebildet ist, das Ansteuersignal (604) zu erzeugen,
wobei ein Bezugspotential (605) der Ansteuerschaltung (201) mit einem Mittelabgriff (606) zwischen den beiden Tiefsetzerstufen (603) verbunden ist,
wobei das galvanische Trennelement (103) ein Rückkopplungselement (OC1) zur Regelung des Eingangsschaltkreises (601) umfasst, welches durch eine sekundärseitige Regelung (202) ansteuerbar ist.

2. Schaltnetzteil (400, 500, 600) nach Anspruch 1,
wobei die beiden Tiefsetzerstufen (403) ausgebildet sind, einen Spannungsabfall der Eingangsspannung (V_{IN}) zu bewirken und damit eine Isolationsspannung (V_{IS1}, V_{IS2}, V_{IS3}) über dem galvanischen Trennelement (103) herabzusetzen.

3. Schaltnetzteil (600) nach Anspruch 1 oder 2,
wobei der Eingangsschaltkreis (601) einen Impulsübertrager (Tr11) oder eine Treiberschaltung umfasst, welche ausgebildet sind, das Ansteuersignal (604) der beiden Tiefsetzerstufen (603) an ein Bezugspotential der beiden Leistungsschalter (S11, S12) anzupassen.

4. Schaltnetzteil (600) nach einem der vorstehenden Ansprüche,
wobei die beiden Tiefsetzerstufen (603) eingangsseitig über zwei in Reihe geschaltete Eingangskondensatoren (C11, C12) miteinander gekoppelt sind, deren Mittelabgriff (606) den Mittelabgriff (606) zwischen den beiden Tiefsetzerstufen (603) bildet.

5. Schaltnetzteil (600) nach Anspruch 4,
wobei die beiden Eingangskondensatoren (C11, C12) zwischen der positiven Eingangsspannung (+V_{IN}) und der negativen Eingangsspannung (-V_{IN}) in Reihe geschaltet sind.

6. Schaltnetzteil (600) nach einem der vorstehenden Ansprüche,
wobei die beiden Tiefsetzerstufen (603) ausgangsseitig über einen einzelnen Ausgangskondensator (C13) miteinander gekoppelt sind.

7. Schaltnetzteil (600) nach einem der vorstehenden Ansprüche,
wobei das galvanische Trennelement (103) einen Transformator (Tr1) umfasst, der über einen Leistungsschalter (S3) durch die Ansteuerschaltung (201) ansteuerbar ist.

8. Schaltnetzteil (600) nach Anspruch 7,
wobei der Eingangsschaltkreis (601) einen zwischen die Ansteuerschaltung (201) und den Leistungsschalter (S3) geschalteten Transformator (Tr2) umfasst, welcher die Ansteuerschaltung (201) von dem Leistungsschalter (S3) galvanisch trennt.

9. Schaltnetzteil (600) nach einem der vorstehenden Ansprüche,
wobei das Rückkopplungselement (OC1) zur Regelung des Eingangsschaltkreises (601) ein Optokoppler (OC1) oder ein magnetischer Koppler ist.

10. Schaltnetzteil (400, 500, 600) nach einem der vorstehenden Ansprüche,
welches an der positiven Eingangsspannung (+V_{IN}) oder an der negativen Eingangsspannung (-V_{IN}) geerdet ist.

11. Verfahren (700) zum Herabsetzen der Isolationsanforderung an ein Schaltnetzteil (400, 500, 600) mit einem von einer Eingangsspannung (V_{IN}) gespeisten Eingangsschaltkreis (401); einem mit dem Eingangsschaltkreis (401) gekoppelten Ausgangsschaltkreis (402) zum Bereitstellen einer Ausgangsspannung (V_{OUT}); und einem galvanischen Trennelement (103) zwischen dem Eingangsschaltkreis (401) und dem Ausgangsschaltkreis (402), welches ausgebildet ist, eine vorgegebene Sicherheitsanforderung bezüglich einer Isolation zwischen der Eingangsspannung (V_{IN}) und der Ausgangsspannung (V_{OUT}) einzuhalten, mit den folgenden Schritten:
Schalten (701) zweier gekoppelter Tiefsetzerstufen (403) in den Eingangsschaltkreis (401) des Schaltnetzteils (400, 500, 600), von denen eine erste Tiefsetzerstufe (404) in der positiven Eingangsspannung (+V_{IN}) und eine zweite Tiefsetzerstufe (405) in der negativen Eingangsspannung (-V_{IN}) dem galvanischen Trennelement (103) vorgeschaltet wird,
wobei die beiden Tiefsetzerstufen (603) jeweils eine Spule (L11) umfassen, welche auf einen gemeinsamen Kern gewickelt sind,
wobei die beiden Tiefsetzerstufen (603) jeweils einen Leistungsschalter (S11, S12), eine Freilaufdiode (D11, D12) und die über den gemeinsamen Kern gekoppelten Spulen (L11) umfassen,
wobei die beiden Tiefsetzerstufen (603) über ein Ansteuersignal (604) gemeinsam ansteuerbar sind,
wobei der Eingangsschaltkreis (601) eine Ansteuerschaltung (201) umfasst, welche ausgebildet ist, das Ansteuersignal (604) zu erzeugen,
wobei ein Bezugspotential (605) der Ansteuerschaltung (201) mit einem Mittelabgriff (606) zwischen den beiden Tiefsetzerstufen (603) verbunden ist,
wobei das galvanische Trennelement (103) ein Rückkopplungselement (OC1) zur Regelung des Eingangsschaltkreises (601) umfasst, welches durch eine sekundärseitige Regelung (202) ansteuerbar ist.

## Claims

1. A switched-mode power supply (400, 500, 600), comprising:
an input circuit (401) powered by an input voltage (V_{IN});
an output circuit (402) coupled to the input circuit, for providing an output voltage (V_{OUT}); and
a DC isolating element (103) between the input circuit (401) and the output circuit (402), which DC isolating element (103) is configured to observe a prescribed safety requirement in regard to isolation between the input voltage (V_{IN}) and the output voltage (V_{OUT}),
wherein the input circuit (401) comprises two coupled step-down converter stages (403), of which a first step-down converter stage (404) in the positive input voltage (+V_{IN}) and a second step-down converter stage (405) in the negative input voltage (-V_{IN}) are connected, wherein the two coupled step-down converter stages (404, 405) are connected to the input circuit (401) upstream of the DC isolating element (103),
wherein the two step-down converter stages (603) each comprise a coil (L11) which are wound on a common core,
wherein each of the two coupled step-down converter stages (603) comprises a power switch (S11, S12), a free-wheeling diode (D11, D12) and the coils (L11) which are wound on the common core,
wherein the two step-down converter stages (603) are configured to be controlled jointly via a control signal (604),
wherein the input circuit (601) comprises a control circuit (201) configured to generate the control signal (604),
wherein a reference potential (605) of the control circuit (201) is associated with a center tap (606) between the two step-down converter stages (603),
wherein the DC isolating element (103) comprises a feedback element (OC1) configured to regulate the input circuit (601), wherein the feedback element (OC1) is configured to be controlled by a secondary-side regulator (202).

2. The switched-mode power supply (400, 500, 600) according to claim 1,
wherein the two step-down converter stages (403) are configured to cause a voltage drop of the input voltage (V_{IN}) and thus reduce an isolation voltage (V_{IS1}, V_{IS2}, V_{IS3}) across the DC isolating element (103).

3. The switched-mode power supply (600) according to claim 1 or 2,
wherein the input circuit (601) comprises a pulse transformer (Tr11) or a driver circuit configured to adapt the control signal (604) of the two step-down converter stages (603) to a reference potential of both power switches (S11, S12).

4. The switched-mode power supply (600) according to any of the preceding claims,
wherein the two step-down converter stages (603) are coupled to one another on an input side via two input capacitors (C11, C12) connected in series, wherein a center tap (606) of the two input capacitors (C11, C12) forms the center tap (606) between the two step-down converter stages (603).

5. The switched-mode power supply (600) according to claim 4,
wherein the two input capacitors (C11, C12) are connected in series between the positive input voltage (+V_{IN}) and the negative input voltage (-V_{IN}).

6. The switched-mode power supply (600) according to any of the preceding claims,
wherein the two step-down converter stages (603) are coupled to one another on an output side via a single output capacitor (C13).

7. The switched-mode power supply (600) according to any of the preceding claims,
wherein the DC isolating element (103) comprises a transformer (Tr1) configured to be controlled by the control circuit (201) via a power switch (S3).

8. The switched-mode power supply (600) according to claim 7,
wherein the input circuit (610) comprises a transformer (Tr2) connected between the control circuit (201) and the power switch (S3), wherein the transformer (Tr2) galvanically isolates the control circuit (201) from the power switch (S3).

9. The switched-mode power supply (600) according to any of the preceding claims,
wherein the feedback element (OC1) configured to regulate the input circuit (601) is an optocoupler (OC1) or a magnetic coupler

10. The switched-mode power supply (400, 500, 600) according to any of the preceding claims,
wherein the switched-mode power supply (400, 500, 600) is grounded to the positive input voltage (+V_{IN}) or to the negative input voltage (-V_{IN}).

11. A method (700) for reducing an insulation requirement on a switched-mode power supply (400, 500, 600) comprising an input circuit (401) powered by an input voltage (V_{IN}); an output circuit (402) coupled to the input circuit (401), for providing an output voltage (V_{OUT}); and a DC isolating element (103) between the input circuit (401) and the output circuit (402), which DC isolating element (103) is configured to observe a prescribed safety requirement in regard to isolation between the input voltage (V_{IN}) and the output voltage (V_{OUT}), the method (700) comprising:
switching two coupled step-down converter stages (403) in the input circuit (410) of the switched-mode power supply (400, 500, 600), wherein a first step-down converter stage (404) of the two coupled step-down converter stages (403) is connected upstream of the DC isolating element (103) in the positive input voltage (+V_{IN}) and a second step-down converter stage (405) of the two coupled step-down converter stages (403) is connected upstream of the DC isolating element (103) in the negative input voltage (-V_{IN}),
wherein the two step-down converter stages (603) each comprise a coil (L11) which are wound on a common core,
wherein each of the two coupled step-down converter stages (603) comprises a power switch (S11, S12), a free-wheeling diode (D11, D12) and the coils (L11) which are wound on the common core,
wherein the two step-down converter stages (603) are configured to be controlled jointly via a control signal (604),
wherein the input circuit (601) comprises a control circuit (201) configured to generate the control signal (604),
wherein a reference potential (605) of the control circuit (201) is associated with a center tap (606) between the two step-down converter stages (603),
wherein the DC isolating element (103) comprises a feedback element (OC1) configured to regulate the input circuit (601), wherein the feedback element (OC1) is configured to be controlled by a secondary-side regulator (202).

## Revendications

1. Une alimentation à découpage (400, 500, 600) comprenant :
un circuit d'entrée (401) alimenté par une tension d'entrée (VIN);
un circuit de sortie (402) couplé au circuit d'entrée, fournissant une tension de sortie (VOUT) ; et
un élément d'isolation CC (103) entre le circuit d'entrée (401) et le circuit de sortie (402), cet élément d'isolation CC (103) étant configuré pour respecter une exigence de sécurité prescrite en matière d'isolation entre la tension d'entrée (VIN) et la tension de sortie (VOUT),
le circuit d'entrée (401) comprenant deux étages convertisseurs abaisseurs couplés (403), dont un premier étage convertisseur abaisseur (404) à la tension d'entrée positive (+VIN) et un second étage convertisseur abaisseur (405) à la tension d'entrée négative (-VIN), les deux étages convertisseurs abaisseurs couplés (404, 405) étant connectés au circuit d'entrée (401) en amont de l'élément d'isolation CC (103),
chacun des deux étages convertisseurs abaisseurs (603) comprenant une bobine (L11) enroulée sur un noyau commun,
chacun des deux étages convertisseurs abaisseurs couplés (603) comprenant un interrupteur de puissance (S11, S12), une diode de roue libre (D11, D12) et les bobines (L11) enroulées sur le noyau commun,
les deux étages de conversion abaisseurs (603) étant configurés pour être commandés conjointement par un signal de commande (604),
le circuit d'entrée (601) comprenant un circuit de commande (201) configuré pour générer le signal de commande (604),
un potentiel de référence (605) du circuit de commande (201) étant associé à une prise centrale (606) entre les deux étages de conversion abaisseurs (603),
l'élément d'isolation CC (103) comprenant un élément de rétroaction (OC1) configuré pour réguler le circuit d'entrée (601), cet élément de rétroaction (OC1) étant configuré pour être commandé par un régulateur secondaire (202).

2. L'alimentation à découpage (400, 500, 600) selon la revendication 1,
dans laquelle les deux étages de conversion abaisseurs (403) sont configurés pour provoquer une chute de tension de la tension d'entrée (VIN) et ainsi réduire une tension d'isolation (VIS1, VIS2, VIS3) aux bornes de l'élément d'isolation CC (103).

3. L'alimentation à découpage (600) selon la revendication 1 ou 2,
dans laquelle le circuit d'entrée (601) comprend un transformateur d'impulsions (Tr11) ou un circuit de commande configuré pour adapter le signal de commande (604) des deux étages de conversion abaisseurs (603) à un potentiel de référence des deux interrupteurs de puissance (S11, S12).

4. L'alimentation à découpage (600) selon l'une quelconque des revendications précédentes,
dans laquelle les deux étages de conversion abaisseurs (603) sont couplés en entrée par deux condensateurs d'entrée (C11, C12) montés en série, la prise centrale (606) de ces condensateurs constituant la prise de raccordement entre les deux étages de conversion abaisseurs (603).

5. L'alimentation à découpage (600) selon la revendication 4,
dans laquelle les deux condensateurs d'entrée (C11, C12) sont montés en série entre la tension d'entrée positive (+VIN) et la tension d'entrée négative (-VIN).

6. L'alimentation à découpage (600) selon l'une quelconque des revendications précédentes,
dans laquelle les deux étages de conversion abaisseurs (603) sont couplés en sortie par un unique condensateur de sortie (C13).

7. L'alimentation à découpage (600) selon l'une quelconque des revendications précédentes,
dans laquelle l'élément d'isolation CC (103) comprend un transformateur (Tr1) configuré pour être commandé par le circuit de commande (201) via un interrupteur de puissance (S3).

8. L'alimentation à découpage (600) selon la revendication 7,
dans laquelle le circuit d'entrée (610) comprend un transformateur (Tr2) connecté entre le circuit de commande (201) et l'interrupteur de puissance (S3), ledit transformateur (Tr2) isolant galvaniquement le circuit de commande (201) de l'interrupteur de puissance (S3).

9. L'alimentation à découpage (600) selon l'une quelconque des revendications précédentes,
dans laquelle l'élément de rétroaction (OC1) configuré pour réguler le circuit d'entrée (601) est un optocoupleur (OC1) ou un coupleur magnétique.

10. L'alimentation à découpage (400, 500, 600) selon l'une quelconque des revendications précédentes,
dans laquelle l'alimentation à découpage (400, 500, 600) est mise à la terre à la tension d'entrée positive (+VIN) ou à la tension d'entrée négative (-VIN).

11. Procédé (700) pour réduire les exigences d'isolation d'une alimentation à découpage (400, 500, 600) comprenant un circuit d'entrée (401) alimenté par une tension d'entrée (VIN) ; un circuit de sortie (402) couplé au circuit d'entrée (401), pour fournir une tension de sortie (VOUT) ; et un élément d'isolation CC (103) entre le circuit d'entrée (401) et le circuit de sortie (402), cet élément d'isolation CC (103) étant configuré pour respecter une exigence de sécurité prescrite en matière d'isolation entre la tension d'entrée (VIN) et la tension de sortie (VOUT), le procédé (700) comprenant :
la commutation de deux étages convertisseurs abaisseurs couplés (403) dans le circuit d'entrée (410) de l'alimentation à découpage (400, 500, 600), un premier étage convertisseur abaisseur (404) étant connecté en amont de l'élément d'isolation CC (103) pour la tension d'entrée positive (+VIN) et un second étage convertisseur abaisseur (405) étant connecté en amont de l'élément d'isolation CC (103) pour la tension d'entrée négative (-VIN),
chacun des deux étages convertisseurs abaisseurs (603) comprenant une bobine (L11) enroulée sur un noyau commun,
chacun des deux étages convertisseurs abaisseurs couplés (603) comprend un interrupteur de puissance (S11, S12), une diode de roue libre (D11, D12) et les bobines (L11) enroulées sur le noyau commun,
dans lequel les deux étages de conversion abaisseurs (603) sont configurés pour être commandés conjointement par un signal de commande (604),
dans lequel le circuit d'entrée (601) comprend un circuit de commande (201) configuré pour générer le signal de commande (604),
dans lequel un potentiel de référence (605) du circuit de commande (201) est associé à une prise centrale (606) entre les deux étages de conversion abaisseurs (603),
dans lequel l'élément d'isolation CC (103) comprend un élément de rétroaction (OC1) configuré pour réguler le circuit d'entrée (601), cet élément de rétroaction (OC1) étant configuré pour être commandé par un régulateur secondaire (202).
